# EUROPÄISCHE PATENTANMELDUNG

(11) **EP 2 813 965 A1**
(43) Veröffentlichungstag der Anmeldung: **17.12.2014**
(21) Anmeldenummer: 14000642.0
(22) Anmeldetag: 24.02.2014
(51) Int. Cl.: G06F 21/54, G06F 21/62

(54) **Verfahren und Vorrichtung zum Betreiben einer Ausführungsumgebung für Applikationen**

(30) Priorität: 26.02.2013 DE 102013003204
(71) Anmelder: Giesecke & Devrient GmbH, 81677 München (DE)
(72) Erfinder: Schäfer, Frank, 82178 Puchheim (DE)

(57) **Zusammenfassung**

Die Erfindung betrifft ein Verfahren zum Betreiben einer Ausführungsumgebung für Applikationen mit einer ersten in der Ausführungsumgebung ausführbaren Applikation (10), welche erste und zweite Funktionen der Ausführungsumgebung aufruft, und einer Sicherungsschicht (16), die nachträglich zu der ausführbaren ersten Applikation (10) hinzugefügt wird. Hierbei wird die erste Applikation (10) weiterhin in der Ausführungsumgebung ausgeführt. Die erste Applikation (10) ruft weiterhin die ersten Funktionen der Ausführungsumgebung auf. Die Sicherungsschicht (16) ruft anstelle von Aufrufen der zweiten Funktionen durch die erste Applikation (10) sichere zweite Funktionen für die erste Applikation (10) auf.

## Beschreibung

Die Erfindung betrifft ein Verfahren zum Betreiben einer Ausführungsumgebung für Applikationen sowie eine Vorrichtung zum Ausführen der Ausführungsumgebung.

Bei in der Ausführungsumgebung ausführbaren Applikationen, welche zur Ausführung verschiedener Funktionen Standardfunktionen eines Betriebssystems nutzen, besteht das Problem, dass diese häufig unsicher sind. Dieses Problem betrifft beispielsweise einen lesenden oder schreibenden Zugriff auf einen internen Speicher eines Geräts, in welchem die Ausführungsumgebung implementiert ist, sowie bei einem entsprechenden Zugriff auf einen außerhalb des Geräts angeordneten Speicher oder Netzwerk.

Es ist zur Erhöhung der Sicherheit bekannt, die in der Ausführungsumgebung ausführbaren Applikationen nicht im primären Betriebssystem der Ausführungsumgebung, sondern in einer virtuellen Umgebung, das heißt einer virtuellen Maschine im Betriebssystem, auszuführen. Eine Virtualisierung führt jedoch zu einer erhöhten Prozessorlast und damit insbesondere bei batteriebetriebenen Geräten, wie zum Beispiel Mobilfunktelefonen, tragbaren Rechnern, Tablett-PCs, zu kürzeren Akkulaufzeiten.

Es ist ebenfalls bekannt, eine sichere Zusatzschicht (Sicherungsschicht) bei der Erstellung einer Applikation in die Ausführungsumgebung einzubinden. Die sichere Zusatzschicht stellt eine sichere Schnittstelle für Daten- und Netzwerkzugriffe bereit. Der Entwickler der Applikation ist dann daran gehalten, diese Schnittstellen anstatt der von dem Betriebssystem bereitgestellten Schnittstellen zu verwenden. Beim so genannten Bauen (englisch: *build-*Prozess) der Applikation wird die sichere Zusatzschicht dann automatisch eingefügt.

Es ist Aufgabe der Erfindung, ein Verfahren zum Betreiben einer Ausführungsumgebung für Applikationen anzugeben, mit dem eine Absicherung des Betriebs einer Applikation auf einfachere Weise erfolgen kann. Insbesondere soll das Verfahren eine nachträgliche Sicherung einer bereits in einer Ausführungsumgebung enthaltenen Applikation ermöglichen. Es ist weiter Aufgabe der Erfindung eine entsprechende Vorrichtung zum Ausführen einer Ausführungsumgebung für Applikationen anzugeben.

Das erfindungsgemäße Verfahren zum Betreiben einer Ausführungsumgebung für Applikationen umfasst eine erste in der Ausführungsumgebung ausführbare Applikation, welche erste und zweite Funktionen der Ausführungsumgebung aufruft. Das Verfahren umfasst weiter eine Sicherungsschicht, die nachträglich zu der ausführbaren ersten Applikation derart hinzugefügt wird, dass die erste Applikation weiterhin in der Ausführungsumgebung ausgeführt wird, dass die erste Applikation weiterhin die ersten Funktionen der Ausführungsumgebung aufruft, und dass die Sicherungsschicht anstelle von Aufrufen der zweiten Funktionen durch die erste Applikation sichere zweite Funktionen für die erste Applikation aufruft.

Die Vorrichtung zum Ausführen der Ausführungsumgebung für Applikationen umfasst eine erste in der Ausführungsumgebung ausführbare Applikation, welche erste und zweite Funktionen der Ausführungsumgebung auf-ruft, und eine Sicherungsschichit, die nachträglich zu der ausführbaren ersten Applikation derart hinzugefügt ist, dass die erste Applikation weiterhin in der Ausführungsumgebung ausführbar ist, dass die erste Applikation weiterhin die ersten Funktionen der Ausführungsumgebung aufruft, und dass die Sicherungsschicht anstelle von Aufrufen der zweiten Funktionen durch die erste Applikation sichere zweite Funktionen für die erste Applikation aufruft.

Im Gegensatz zur Virtualisierung wird die erste Applikation nicht zur Laufzeit abgesichert, sondern nach der Erstellung der ersten Applikation in der Ausführungsumgebung. Durch die Sicherungsschicht wird hierbei sichergestellt, dass solche Funktionsaufrufe, welche Schnittstellen der ersten Applikation nach außen, beispielsweise zu einem Speicher oder einem Netzwerk, nutzen, über die sichere Funktion der Sicherungsschicht abgesichert ist. Die erste Applikation kann damit abgesichert werden, ohne dass die erste Applikation selbst noch einmal verändert oder eine neue Umgebung auf der Ausführungsumgebung installiert werden muss.

Ein weiterer Vorteil der Erfindung besteht darin, dass sämtliche außerhalb der ersten Applikation erzeugten Daten verschlüsselt abgelegt werden können. Netzwerkzugriffe von und zu der ersten Applikation können gesichert übertragen und geprüft werden.

Die Sicherungsschicht kann gemäß einer Ausgestaltung einen oder mehrere Schlüssel für den Aufruf der sicheren zweiten Funktionen umfassen. Die Schlüssel können hierzu in einem Sicherheitsmodul des Geräts, in dem die Ausführungsumgebung verwirklicht ist, enthalten sein. Für eine Mehrzahl an zweiten sicheren Funktionen kann wahlweise ein und derselbe Schlüssel verwendet werden. Ebenso kann ein eigener Schlüssel für jede sichere zweite Funktionen vorgesehen sein.

Die Sicherungsschicht kann fernverwaltet werden. Zusätzlich oder alternativ können der oder die Schlüssel der Sicherungsschicht fernverwaltet werden.

Die Fernverwaltung kann beispielsweise durch einen Rechner außerhalb des die Ausführungsumgebung umfassenden Geräts erfolgen. In diesem Fall ist es zweckmäßig, wenn für die Fernverwaltung der Sicherungsschicht und/ oder des oder der Schlüssel eine gesicherte Kommunikationsverbindung, beispielsweise mittels VPN (*Virtual Private Network*) oder SSL (*Secure Socket Layer*), eingesetzt wird. Die Fernverwaltung des oder der Schlüssel, beispielsweise durch Löschen eines oder mehrerer der Schlüssel, ermöglicht es, den Zugriff auf von der ersten Applikation verwaltete Daten zu verhindern. Dies ist vorteilhaft, wenn das Gerät, das die Ausführungsumgebung implementiert hat, z.B. abhanden kommt.

In einer eher herkömmlichen Variante werden in einem Binärcode der ersten Applikation die zweiten Aufrufe durch die sicheren zweiten Aufrufe der Sicherungsschicht ersetzt. Dies erfolgt zum Beispiel nach der Erstellung der ersten Applikation und vor der ersten Ausführung der ersten Applikation. Das Ersetzen kann beispielsweise durch einen Binäreditor erfolgen. Hierdurch entsteht eine neue Binärdatei, bestehend aus der alten Binärdatei der ersten Applikation und der Sicherungsschicht, welches die sicheren Mechanismen der Sicherungsschicht und/ oder des Geräts, in dem die Ausführungsumgebung implementiert ist, nutzt.

Vorliegend wird eine von der ersten Applikation aufgerufene zweite Funktion durch die Sicherungsschicht in einen sicheren zweiten Aufruf geändert. Bei dieser Variante erfolgt keine Veränderung des Binärcodes der ersten Applikation. Vielmehr erfolgt eine Abänderung des Aufrufes der zweiten Funktion bei Bedarf.

Die erste Applikation kann durch eine Sicherungsschicht gesichert werden und eine zweite Applikation in der Ausführungsumgebung ungesichert bleiben und unverändert die zweiten unsicheren Funktionen aufrufen. Die nachträglich hinzugefügte Sicherungsschicht kann damit selektiv einzelnen Applikationen "zugeordnet" werden. Es ist jedoch zu betonen, dass durch das Verfahren auch eine solche Variante umfasst ist, bei der die nachträglich hinzugefügte Sicherungsschicht für alle in der Ausführungsumgebung ausführbaren Applikationen zur Anwendung gelangt, um deren Funktionalität abzusichern.

Die Ausführungsumgebung, die erste Applikation, die optionale zweite Applikation und die Sicherungsschicht können von unterschiedlichen Anbietern bereitgestellt werden. Neben einer möglichen höheren Sicherheit gegen Missbrauch bietet dieses Vorgehen auch den Vorteil erhöhter Flexibilität. Wie beschrieben, kann insbesondere die Sicherungsschicht nachträglich zu der ausführbaren zu schützenden ersten Applikation hinzugefügt werden. Dadurch ist es nicht erforderlich, dass die oben genannten Komponenten von ein und demselben Anbieter stammen und zum selben Zeitpunkt erzeugt sind.

Die Ausführungsumgebung, die erste Applikation, die optionale zweite Applikation und die Sicherungsschicht können unabhängig voneinander verwaltet werden. Insbesondere ist es möglich, dass die Sicherungsschicht und die Ausführungsumgebung von unterschiedlichen Instanzen verwaltet werden. Auch diese Ausgestaltungen bieten den Vorteil erhöhter Flexibilität.

Mit anderen Worten wird vorgeschlagen, dass eine Applikation nachträglich abgesichert wird, indem die externen Zugriffe der Applikation, z.B. auf einen internen Speicher oder ein externes Netzwerk, auf unsichere Betriebssystemfunktionen erkannt werden und auf gesicherte Funktionen (sicherer Speicher, abgesicherte Kommunikationsverbindungen) einer Sicherungsschicht umgeleitet oder ersetzt werden. Die Applikation wird hierbei nicht zur Laufzeit abgesichert, wie das bei einer Virtualisierung der Fall ist, sondern nach der Erstellung der Applikation, aber noch vor deren Ausführung. Die Absicherung erfolgt durch eine Anpassung eines Binäreditors an eine sichere Umgebung, indem eine neue Binärdatei erzeugt wird, welche aus der alten Binärdatei und der Sicherungsschicht besteht, wobei Letztere das Sicherheitsmodul und andere Sicherheitseigenschaften des Geräts, in dem die Ausführungsumgebung implementiert ist, nutzt.

Neben der Möglichkeit, alle Daten der Applikation verschlüsselt zu speichern, können Netzwerkzugriffe von und zu der Applikation über sichere Kanäle geleitet und geprüft werden. Darüber hinaus besteht die Möglichkeit eines sicheren Remotemanagements, zum Beispiel über TSM (*Trusted Service Manager*) und sichere Kanäle. Dies ermöglicht die Verwaltung von Daten und Zugriffsrechten, das Löschen von Daten bei auftretenden Bedrohungen, wie zum Beispiel einem Virus, einem auffälligen Bewegungsprofil, und so weiter.

Die Erfindung wird nachfolgend näher anhand von Ausführungsbeispielen in der Zeichnung erläutert. Es zeigen:
- Fig. 1: eine schematische Darstellung eines Geräts mit einer erfindungsgemäß ausgebildeten Ausführungsumgebung für Applikationen,
- Fig. 2: einen Kommunikationsablauf einer herkömmlichen Ausführungsumgebung mit einer Applikation beim Zugriff auf einen internen Speicher des Geräts, auf dem die Ausführungsumgebung implementiert ist,
- Fig. 3: den Kommunikationsablauf einer erfindungsgemäßen Ausführungsumgebung mit einer gesicherten Applikation beim Zugriff auf einen internen Speicher des Geräts, auf dem die Ausführungsumgebung implementiert ist,
- Fig. 4: den Kommunikationsablauf einer herkömmlichen Ausführungsumgebung mit einer Applikation beim Zugriff auf einen Geräte-externen Speicher, und
- Fig. 5: den Kommunikationsablauf einer erfindungsgemäßen Ausführungsumgebung mit einer gesicherten Applikation beim Zugriff auf einen Geräte-externen Speicher.

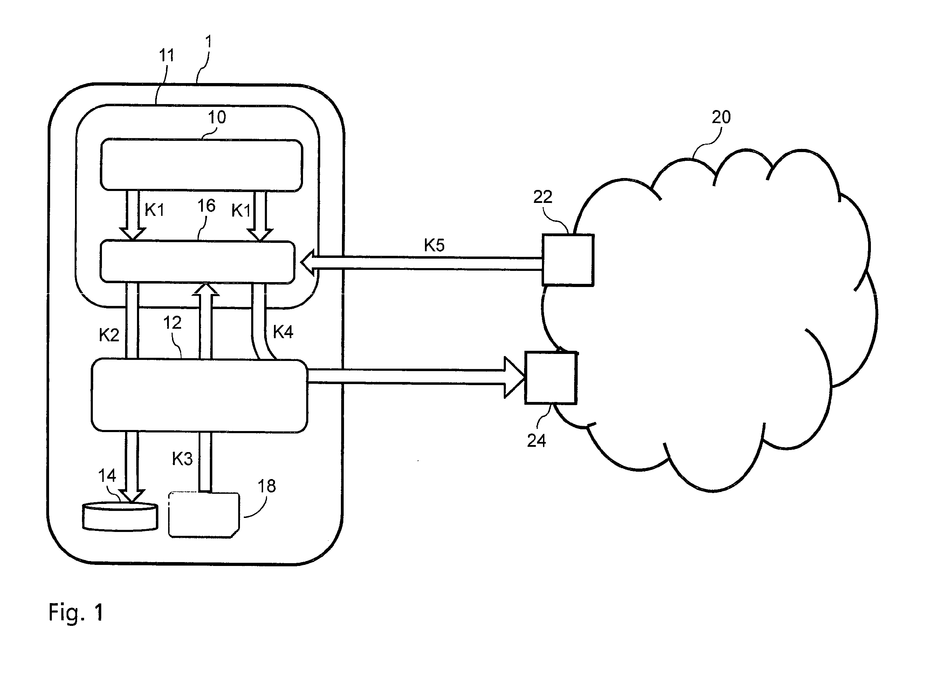

Fig. 1 zeigt eine schematische Darstellung eines Geräts 1 mit einer erfindungsgemäßen Ausführungsumgebung für eine Applikation 10, welche durch ein Betriebssystem 12 des Geräts 1 bereitgestellt wird. In einer dem Fachmann bekannten Weise umfasst das Betriebssystem 12 ein Dateisystem, Mechanismen zum Zugriff auf einen internen Speicher und/oder ein Netzwerk 20 sowie Mechanismen zum Zugriff auf ein Sicherheitselement 18. Das Gerät 1 ist insbesondere ein batteriebetriebenes Endgerät, wie zum Beispiel ein Mobilfunktelefon, ein tragbarer Rechner (Laptop) oder ein Tablett-PC.

Die Ausführungsumgebung wird erfindungsgemäß um eine Sicherungsschicht 16 erweitert, welche nachträglich zu der ausführbaren Applikation 10 hinzugefügt wird. Nachträglich bedeutet, dass die Applikation 10 bereits in der Ausführungsumgebung erzeugt ist, bevor die Sicherungsschicht hinzugefügt wird. Das Hinzufügen der Sicherungsschicht 16 zu der Ausführungsumgebung kann beispielsweise mittels eines so genannten Toolsets, d.h. eines Softwareprogramms, erfolgen. Die Aufgabe der Sicherungsschicht 16 besteht allgemein darin, alle externen Aufrufe der Applikation 10 abzusichern. Externe Aufrufe können in diesem Zusammenhang Zugriffe auf den internen Speicher 14 des Geräts 1, Zugriffe auf das Netzwerk 20 oder das Absichern eines nicht näher dargestellten Displays sein, welche Standardfunktionen des Betriebssystems 12 nutzen.

Die Applikation 10 und die nachträglich hinzugefügte Sicherungsschicht 16 bilden zusammen eine sichere Applikation 11 in der Ausführungsumgebung. Das Hinzufügen der Sicherungsschicht 16 erfolgt derart, dass die Applikation 10 weiterhin in ihrer Ausführungsumgebung ausgeführt wird. Solche Funktionen der Ausführungsumgebung, welche keine externen Aufrufe der Applikation 10 darstellen (d.h. erste Funktionen der Ausführungsumgebung ausführen) werden in unveränderter Weise verarbeitet. Lediglich dann, wenn die Applikation 10 externe Aufrufe (d.h. zweite Funktionen der Ausführungsumgebung) ausführt, so werden anstelle dieser zweiten Funktionen durch die Sicherungsschicht 16 sichere zweite Funktionen der Sicherungsschicht 16 für die Applikation 10 aufgerufen.

Das nachträgliche Hinzufügen der Sicherungsschicht zu der Applikation 10 kann dadurch erfolgen, dass durch das Softwareprogramm die Applikation 10 analysiert und so verändert wird, dass die Sicherungsschicht 16 in den Binärcode der Applikation 10 eingebunden ist. Konkret bedeutet dies, dass in dem Binärcode der Applikation 10 die externen Aufrufe durch die sicheren Aufrufe der Sicherungsschicht 16 ersetzt werden. Alternativ kann eine von der Applikation 10 aufgerufene unsichere zweite Funktion durch die Sicherungsschicht 16 in einen sicheren zweiten Aufruf geändert werden. Beide Varianten haben zur Folge, dass in der Applikation 10 alle externen Zugriffe gefunden und auf die Sicherungsschicht 16 umgeleitet werden. Da die Sicherungsschicht 16 das Ver- und Entschlüsseln übernimmt, ist der externe Zugriffe für die Applikation 10 transparent und es ist keine weitere Änderung an der Applikation 10 erforderlich.

Abgesichert werden die unsicheren zweiten Funktionen, indem alle Daten, die beispielsweise auf den internen Speicher 14 geschrieben oder aus dem internen Speicher 14 gelesen werden sollen, durch die Sicherungsschicht 16 verschlüsselt bzw. entschlüsselt werden. Hierzu kann die Sicherungsschicht 16 auf einen oder mehrere Schlüssel (nicht dargestellt) in dem Sicherheitsmodul 18 des Geräts zugreifen. Der oder die Schlüssel könnten alternativ auch in einer anderen Umgebung, wie zum Beispiel einem sicheren Betriebsystem (z.B. *Mobicore*), vorgehalten werden.

Sollen mittels einer unsicheren zweiten Funktion Zugriffe auf ein Netzwerk 20 erfolgen, so werden diese durch die Sicherungsschicht 16 über ein virtuelles privates Netzwerk zu einem vorgegebenen Rechner 24 geleitet. Der Rechner 24 ist mit einem Schlüssel aus der sicheren Umgebung, welche mindestens die Sicherungsschicht 16 und das Sicherheitsmodul 18 umfasst, abgesichert.

Der oder die Schlüssel in der sicheren Umgebung, im Ausführungsbeispiel in dem Sicherheitsmodul 18, können über einen Rechner 22 für Remote Management verwaltet werden. Zum Beispiel kann durch Löschen eines oder mehrerer Schlüssel in dem Sicherheitsmodul 18 ein Zugriff auf die Daten in dem internen Speicher 14 unterbunden werden, wenn beispielsweise ein Nutzer das Gerät 1 verliert.

Darüber hinaus ermöglicht die Sicherungsschicht 16 auch eine Fernverwaltung von Daten und Einstellungen selbst. Der Rechner 22 für Remote Management kann über die Sicherungsschicht 16 auf die von der Applikation 10 in den internen Speicher 14 gespeicherten Daten zugreifen (K5). Der Zugriff auf die Daten umfasst ein Einspielen, Ändern, Sichern, Löschen, usw. der Daten des internen Speichers 14. Ebenso kann der Rechner 22 für Remote Management auch Netzwerkparameter einstellen. Dies umfasst beispielsweise die Möglichkeit, dass die Applikation 10 nur über das virtuelle private Netzwerk (VPN) auf das Netzwerk 20, beispielsweise das Internet, zugreifen kann (K4). Ebenso kann festgelegt werden, dass durch die Applikation 10 nur ein Zugriff auf vorgegebene Rechner des Netzwerks 20 möglich ist.

Die " Kommunikation" zwischen der Applikation 10 und der Sicherungsschicht 16 erfolgt entsprechend der vorherigen Beschreibung unverschlüsselt (K1). Eine Kommunikation der sicheren Applikation 11 mit dem internen Speicher 14 erfolgt verschlüsselt (K2). Die von dem Sicherheitsmodul 18 an die Sicherungsschicht 16 übergebenen Schlüssel erfolgen verschlüsselt (K3). Wie erläutert, erfolgt eine Kommunikation zwischen der ersten Applikation 11 und dem Netzwerk 20 (K4) über ein verschlüsseltes virtuelles privates Netzwerk (VPN) oder eine SSL.

Dieses Vorgehen wird nachfolgend anhand konkreter Ausführungsbeispiele näher erläutert.

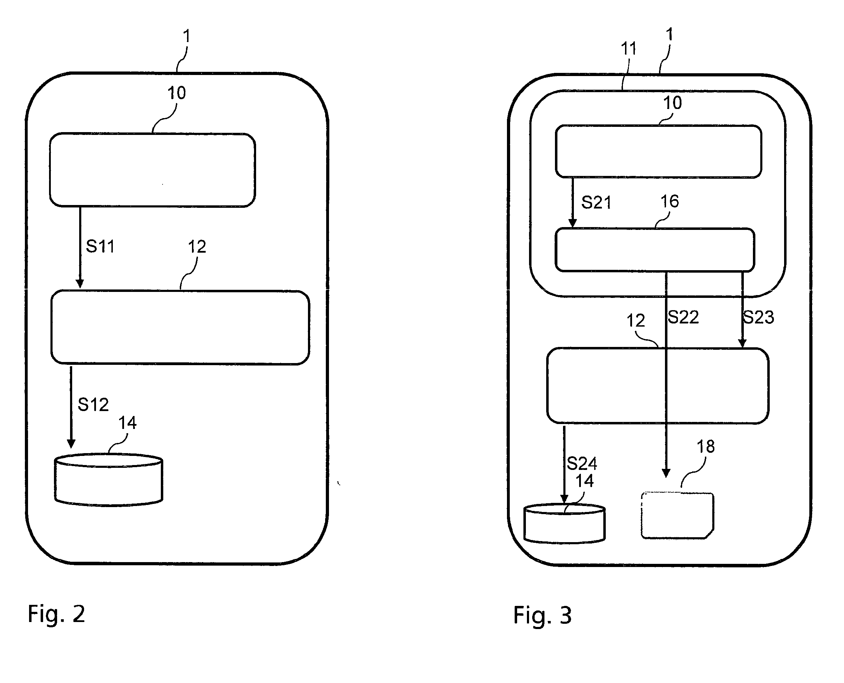

Fig. 2 zeigt einen Kommunikationsablauf einer herkömmlichen Ausführungsumgebung mit einer Applikation 10 beim Zugriff auf den internen Speicher 14 des Geräts 1, auf dem die Ausführungsumgebung implementiert ist. Zum Vergleich zeigt Fig. 3 den Kommunikationsablauf einer erfindungsgemäßen Ausführungsumgebung mit einer gesicherten Applikation beim Zugriff auf den internen Speicher 14 des Geräts 1, auf dem die Ausführungsumgebung implementiert ist.

Mit Bezug auf Fig. 2 wird in einem Schritt S11 durch die (ungesicherte) Applikation 10 eine Funktion ("Speichere Wert") aufgerufen, durch die ein Wert "*x*" in dem internen Speicher 14 gespeichert werden soll. In einem Schritt S12 speichert das Betriebssystem 12 den Wert "*x*" in dem internen Speicher 14.

Bei dem in Fig. 3 gezeigten erfindungsgemäßen Vorgehen wird in einem Schritt S21 durch die Applikation 10 die Funktion (" Speichere Wert") aufgerufen, durch die der Wert "*x*" in dem internen Speicher 14 gespeichert werden soll. Die Sicherungsschicht 16 empfängt diesen Aufruf, aber leitet diesen nicht an das Betriebssystem 12 weiter. Stattdessen wird der Wert "*x*" mit einem in dem Sicherheitsmodul 18 enthaltenen Schlüssel verschlüsselt (Schritt S22). Alternativ verschlüsselt das Sicherheitsmodul 18 den Wert "x" oder einen symmetrischen Schlüssel des Werts "x". Im Schritt S23 ruft die Sicherungsschicht 16 die Funktion "Speichere Wert" des Betriebssystems 12 mit dem verschlüsselten Wert auf. Im Schritt S24 wird der verschlüsselte Wert in dem internen Speicher 14 des Geräts 1 gespeichert.

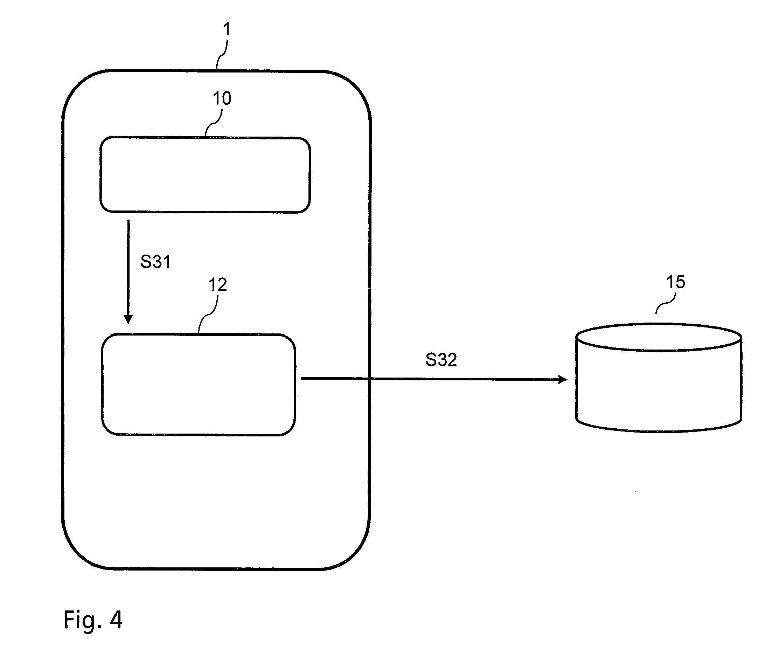

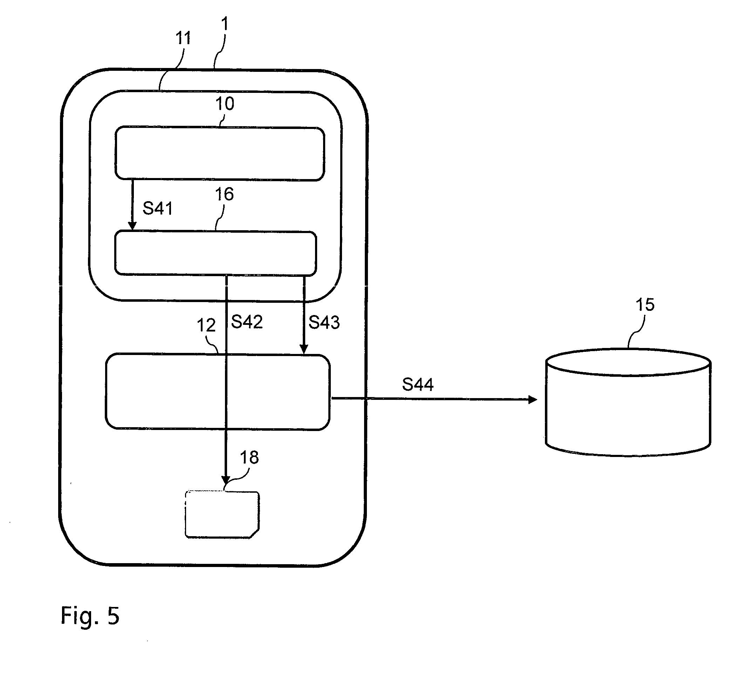

Fig. 4 zeigt einen Kommunikationsablauf einer herkömmlichen Ausführungsumgebung mit einer Applikation 10 beim Zugriff auf einen externen Speicher 15. Zum Vergleich zeigt Fig.5 den Kommunikationsablauf einer erfindungsgemäßen Ausführungsumgebung mit einer gesicherten Applikation beim Zugriff auf den externen Speicher 15. Der externe Speicher 15 kann beispielsweise in dem in Fig.1 dargestellten Netzwerk 20, beispielsweise einem Firmennetzwerk oder dem Internet, vorgesehen sein.

Mit Bezug auf Fig. 4 wird in einem Schritt S31 durch die Applikation 10 eine Funktion ("open socket") aufgerufen, mit der eine Verbindung zu dem externen Speicher 15 aufgebaut werden soll. Nach Herstellung der Verbindung wird ein Wert "y" mittels einer Funktion "Senden" des Betriebssystems 12 an den Speicher 15 übertragen. In einem Schritt S32 überträgt das Betriebssystem 12 den Wert "y" über ein Netzwerkprotokoll an den externen Speicher 15.

Bei dem in Fig. 5 gezeigten erfindungsgemäßen Vorgehen wird in einem Schritt S41 durch die Applikation 10 eine Funktion aufgerufen, mit der eine Verbindung zu dem externen Speicher 15 aufgebaut werden soll. Nach Herstellung der Verbindung soll der Wert "y" mittels einer Funktion "Senden" des Betriebssystems 12 an den Speicher 15 übertragen werden. Die Sicherungsschicht 16 empfängt diesen Aufruf, leitet diesen aber nicht an das Betriebssystem 12 weiter. Stattdessen wird der Wert "y" mit einem in dem Sicherheitsmodul 18 enthaltenen Schlüssel verschlüsselt (Schritt S42). Alternativ verschlüsselt das Sicherheitsmodul den Wert "y" oder einen symmetrischen Schlüssel des Werts "y". Im Schritt S43 öffnet die Sicherungsschicht 16 einen Socket, um eine Verbindung zu dem externen Speicher aufzubauen und überträgt den verschlüsselten Wert von "y" mittels der Funktion "Senden" des Betriebssystems 12 an den externen Speicher 15. In Schritt S44 überträgt das Betriebssystem 12 den verschlüsselten Wert von "y" an den externen Speicher 15.

In einer Abwandlung kann die Sicherungsschicht 16 kryptographische Funktionen des Sicherheitsmoduls verwenden, um einen verschlüsselten Kanal zu dem externen Speicher 15 aufzubauen.

Zusammenfassend kann somit ein Aufruf der Applikation bei Bedarf abgeändert werden. Das Abändern betrifft die externen Aufrufe. Es wird dann statt einem normalen, unsicheren Aufruf ein sicherer Aufruf durch die Sicherungsschicht durchgeführt. Die Daten können vorher verschlüsselt werden.

Es ist möglich, den Binärcode in der Applikation zu modifizieren oder zu kapseln. Welche der beiden Varianten gewählt wird, ist von der Anwendung abhängig. Nach Identifizierung der abzusichernden Aufrufe und deren Absicherung können die Standardaufrufe des Betriebssystems genutzt werden. Dies bedeutet, es ist keine neue API (*Application Programmable Interface*) notwendig. Durch die Integration der Sicherungsschicht wird eine neue API möglich, die das Remote Management der Daten der Applikation sehr einfach ermöglicht, da alle Daten der Applikation durch die Sicherungsschicht gehen. Die Sicherungsschicht könnte also eine neue API für Remote Management der Daten anbieten, und zwar auch für Applikationen, die das vorher nicht ermöglichten.

## Patentansprüche

1. Verfahren zum Betreiben einer Ausführungsumgebung für Applikationen mit
- einer ersten in der Ausführungsumgebung ausführbaren Applikation (10), welche erste und zweite Funktionen der Ausführungsumgebung aufruft, und
- einer Sicherungsschicht (16), die nachträglich zu der ausführbaren ersten Applikation (10) derart hinzugefügt wird,
- dass die erste Applikation (10) weiterhin in der Ausführungsumgebung ausgeführt wird,
- dass die erste Applikation (10) weiterhin die ersten Funktionen der Ausführungsumgebung aufruft, und
- dass die Sicherungsschicht (16) anstelle von Aufrufen der zweiten Funktionen durch die erste Applikation (10) sichere zweite Funktionen für die erste Applikation (10) aufruft, indem die Sicherungsschicht (16) die Aufrufe der zweiten Funktion durch die erste Applikation (10) in Aufrufe der sicheren zweiten Funktion ändert.

2. Verfahren nach Anspruch 1, bei dem die Sicherungsschicht (16) einen oder mehrere eigene Schlüssel für den Aufruf der sicheren zweiten Funktionen umfasst.

3. Verfahren nach Anspruch 1 oder 2, bei dem die Sicherungsschicht (16) und/oder der oder die Schlüssel der Sicherungsschicht (16) fernverwaltet werden.

4. Verfahren nach einem der Ansprüche 1 bis 3, bei dem die erste Applikation (10) durch die Sicherungsschicht (16) gesichert wird und eine zweite Applikation in der Ausführungsumgebung ungesichert bleibt und unverändert die zweiten unsicheren Funktionen aufruft.

5. Verfahren nach einem der Ansprüche 1 bis 4, bei dem die Ausführungsumgebung, die erste Applikation (10), die optionale zweite Applikation und Sicherungsschicht (10) von unterschiedlichen Anbietern bereitgestellt werden.

6. Verfahren nach einem der Ansprüche 1 bis 5, bei dem die Ausführungsumgebung, die erste Applikation (10), die optionale zweite Applikation und die Sicherungsschicht (16) unabhängig voneinander verwaltet werden.

7. Verfahren nach Anspruch 6, bei dem die Sicherungsschicht (16) und die Ausführungsumgebung von unterschiedlichen Instanzen verwaltet werden.

8. Vorrichtung zum Ausführen einer Ausführungsumgebung für Applikationen, umfassend
- eine erste in der Ausführungsumgebung ausführbare Applikation (10), welche erste und zweite Funktionen der Ausführungsumgebung aufruft, und
- eine Sicherungsschicht (16), die nachträglich zu der ausführbaren ersten Applikation (10) derart hinzugefügt ist,
- dass die erste Applikation (10) weiterhin in der Ausführungsumgebung ausführbar ist,
- dass die erste Applikation (10) weiterhin die ersten Funktionen der Ausführungsumgebung aufruft, und
- dass die Sicherungsschicht (16) anstelle von Aufrufen der zweiten Funktionen durch die erste Applikation sichere zweite Funktionen für die erste Applikation aufruft.
